# EUROPEAN PATENT APPLICATION

(11) **EP 4 704 451 A1**
(43) Date of publication of application: **04.03.2026**
(21) Application number: 23934806.3
(22) Date of filing: 03.08.2023
(51) Int. Cl.: H04W 4/70, B63G 8/00, B63H 1/00, B63H 5/00, E04H 4/16, G01S 15/93, G01S 17/93, G05D 1/00, B63B 59/10, G05D 1/242, G05D 1/246, G05D 107/00, G05D 109/10, G05D 109/30, G05D 109/50, G05D 1/648, G05D 105/10, G05D 111/20, B25J 9/16

(54) **ROBOT CONTROL METHOD AND APPARATUS**

(30) Priority: 27.04.2023 CN 202310473863
(71) Applicant: Xingmai Innovation Technology (Suzhou) Co., Ltd., Suzhou, Jiangsu 215124 (CN)
(72) Inventor: ZHANG, Shilei, Suzhou, Jiangsu 215124 (CN)
(74) Representative: Huang, Liwei
(86) International application number: PCT/CN2023/111087
(87) International publication number: WO 2024/221634

(57) **Abstract**

Embodiments of this application provide a robot control method and apparatus. The method includes: obtaining first sensing information collected by a first sensor in a first direction of a target robot; obtaining second sensing information collected by a second sensor in a second direction of the target robot, where the first direction is perpendicular to the second direction; and controlling a moving direction of the target robot in a target swimming pool based on the first sensing information and the second sensing information, where the target robot is configured to clean the target swimming pool. According to embodiments of this application, a problem of incomplete cleaning of the swimming pool due to an inappropriate distance between a swimming pool robot and a wall of the swimming pool is resolved. In this way, the swimming pool robot keeps an appropriate distance from the wall of the swimming pool, and a swimming pool cleaning effect is improved.

## Description

This application claims priority to Chinese Patent Application No. 202310473863.X, filed with the China National Intellectual Property Administration on April 27, 2023 and entitled "ROBOT CONTROL METHOD AND APPARATUS", which is incorporated herein by reference in its entirety.

### TECHNICAL FIELD

Embodiments of this application relate to the communication field, and in particular, to a robot control method and apparatus.

### BACKGROUND

Motion paths of most of swimming pool robots in a related technology are extremely irregular, and a cleaning path is mainly randomly selected. After moving forward and then meeting a wall in a direction, the swimming pool robot randomly selects a direction and then continues to move straight and perform cleaning. Consequently, a distance between the swimming pool robot and a wall of a swimming pool is inappropriate, resulting in an extremely poor full-coverage cleaning effect of the robot and severely missed cleaning.

An effective solution to resolve the above problem has not been proposed.

### SUMMARY

Embodiments of this application provide a robot control method and apparatus, to at least resolve a problem of incomplete cleaning of a swimming pool due to an inappropriate distance between a swimming pool robot and a wall of the swimming pool in a related technology.

An embodiment of this application provides a robot control method, including: obtaining first sensing information collected by a first sensor in a first direction of a target robot; obtaining second sensing information collected by a second sensor in a second direction of the target robot, where the first direction is perpendicular to the second direction; and controlling a moving direction of the target robot in a target swimming pool based on the first sensing information and the second sensing information, where the target robot is configured to clean the target swimming pool.

In an example embodiment, the controlling a moving direction of the target robot in a target swimming pool based on the first sensing information and the second sensing information includes: controlling, when a distance indicated by the first sensing information between the target robot and a first obstacle in the first direction reaches a first maximum threshold, the target robot to move toward a third direction, where the third direction is opposite to the second direction.

In an example embodiment, the controlling, when a distance indicated by the first sensing information between the target robot and a first obstacle reaches a first maximum threshold, the target robot to move toward a third direction includes: reducing a moving speed of the target robot when the distance indicated by the first sensing information between the target robot and the first obstacle reaches the first maximum threshold, where the moving speed of the target robot is zero when the distance between the target robot and the first obstacle reaches a first minimum threshold, where the first minimum threshold is less than the first maximum threshold; and when the distance between the target robot and the first obstacle reaches the first minimum threshold, controlling the target robot to rotate to the third direction.

In an example embodiment, after the moving speed of the target robot is zero when the distance between the target robot and the first obstacle reaches the first minimum threshold, the method further includes: controlling the robot to rotate toward the third direction in situ until the second sensor is capable of detecting a second obstacle in the second direction of the robot.

In an example embodiment, the controlling, when a distance indicated by the first sensing information between the target robot and a first obstacle reaches a first maximum threshold, the target robot to move toward a third direction includes: reducing a moving speed of the target robot when the distance indicated by the first sensing information between the target robot and the first obstacle reaches the first maximum threshold, where the moving speed of the target robot is zero when the distance between the target robot and the first obstacle reaches a first minimum threshold, where the first minimum threshold is less than the first maximum threshold; when the distance between the target robot and the first obstacle reaches the first minimum threshold, controlling the target robot to move toward a fourth direction for a preset distance, where the fourth direction is opposite to the first direction; and when the target robot moves toward the fourth direction for the preset distance, controlling the target robot to rotate to the third direction.

In an example embodiment, the controlling, when a distance indicated by the first sensing information between the target robot and a first obstacle reaches a first maximum threshold, the target robot to move toward a third direction includes: when the distance indicated by the first sensing information between the target robot and the first obstacle reaches the first maximum threshold, reducing a moving speed of the target robot and controlling the target robot to rotate toward the third direction at a preset rotation speed. When the distance between the target robot and the first obstacle reaches a first minimum threshold, the target robot rotates to the third direction.

In an example embodiment, the controlling a moving direction of the target robot in a target swimming pool based on the first sensing information and the second sensing information includes: when a distance indicated by the second sensing information between the target robot and a second obstacle in the second direction is within a preset range, controlling the target robot to move toward a direction parallel to the second obstacle; or controlling, when the distance indicated by the second sensing information between the target robot and the second obstacle is within the preset range, the target robot to rotate toward the second direction at a preset rotation speed, and controlling, when the distance between the target robot and the second obstacle reaches a second minimum threshold, the target robot to move toward the direction parallel to the second obstacle, where the second minimum threshold is less than a minimum value within the preset range; or controlling the moving direction of the target robot based on the distance between the target robot and the second obstacle when the distance indicated by the second sensing information between the target robot and the second obstacle is not within the preset range.

In an example embodiment, the controlling the moving direction of the target robot based on the distance between the target robot and the second obstacle when the distance indicated by the second sensing information between the target robot and the second obstacle is not within the preset range includes: when the distance between the target robot and the second obstacle is less than the second minimum threshold and greater than or equal to a third minimum threshold, reducing a moving speed of the target robot and controlling the target robot to rotate toward a third direction at the preset rotation speed, and when the distance between the target robot and the second obstacle reaches the second minimum threshold, controlling the target robot to move toward the direction parallel to the second obstacle, where the third minimum threshold is less than the second minimum threshold, and the third direction is opposite to the second direction; or when the distance between the target robot and the second obstacle is less than the third minimum threshold, controlling the target robot to rotate to the third direction.

In an example embodiment, the controlling the moving direction of the target robot based on the distance between the target robot and the second obstacle when the distance indicated by the second sensing information between the target robot and the second obstacle is not within the preset range includes: when the distance between the target robot and the second obstacle is greater than or equal to a second maximum threshold and less than or equal to a third maximum threshold, controlling the target robot to rotate toward the second direction at the preset rotation speed, and when the distance between the target robot and the second obstacle reaches the second minimum threshold, controlling the target robot to move toward the direction parallel to the second obstacle; or when the distance between the target robot and the second obstacle is greater than or equal to the second maximum threshold and less than or equal to the third maximum threshold, controlling the target robot to rotate toward the second direction at the preset rotation speed, and when the distance between the target robot and the second obstacle reaches the minimum value within the preset range, controlling the target robot to move toward the direction parallel to the second obstacle; or when the distance between the target robot and the second obstacle is greater than or equal to the third maximum threshold, controlling the target robot to rotate to the second direction.

In an example embodiment, a cleaning apparatus is provided in the second direction of the target robot, and the method further includes: in a process of controlling the target robot to move, controlling the cleaning apparatus to clean the target swimming pool.

In an example embodiment, the first direction is a forward direction of the target robot, and the second direction is a leftward direction or a rightward direction of the target robot.

In an example embodiment, each of the first sensor and the second sensor is a waterproof ultrasonic sensor.

In an example embodiment, the first direction is the forward direction of the target robot, and the second direction is the rightward direction of the target robot.

According to another embodiment of this application, a robot control apparatus is provided, including: a first obtaining module configured to obtain first sensing information collected by a first sensor in a first direction of a target robot; a second obtaining module configured to obtain second sensing information collected by a second sensor in a second direction of the target robot, where the first direction is perpendicular to the second direction; and a control module configured to control a moving direction of the target robot in a target swimming pool based on the first sensing information and the second sensing information, where the target robot is configured to clean the target swimming pool.

According to another embodiment of this application, a swimming pool robot is provided, including: a first sensor provided in a first direction of the swimming pool robot and configured to collect first sensing information in the first direction; a second sensor provided in a second direction of the swimming pool robot and configured to collect second sensing information in the second direction; a processor configured to control a moving direction of the target robot in a target swimming pool based on the first sensing information and the second sensing information, where the swimming pool robot is configured to clean the target swimming pool; and a cleaning apparatus configured to clean the target swimming pool.

In an example embodiment, the cleaning apparatus filters water in the target swimming pool to clean the water in the target swimming pool.

In an example embodiment, the cleaning apparatus is provided in the second direction of the robot and configured to clean a wall of the target swimming pool.

In an example embodiment, the cleaning apparatus includes a pumping apparatus and a filter. The pumping apparatus sucks in water in the target swimming pool through a water inlet, the filter filters out debris and/or garbage in the water, and filtered water is discharged through a water outlet, so that the water in the target swimming pool is cleaned.

According to still another embodiment of this application, a computer-readable storage medium is further provided. The computer-readable storage medium stores a computer program. When the computer program is run, steps in any one of the method embodiments are performed.

According to still another embodiment of this application, an electronic device is further provided. The electronic device includes a memory and a processor. The memory stores a computer program. The processor is configured to: when executing the computer program, perform steps in any one of the method embodiments.

According to this application, the first sensor is provided in the first direction of the target robot, the first sensor collects the first sensing information in the first direction, the second sensor is provided in the second direction of the target robot, the second sensor collects the second sensing information in the second direction, and the moving direction of the target robot is controlled based on the first sensing information and the second sensing information.

### BRIEF DESCRIPTION OF THE DRAWINGS

FIG. 1 is a block diagram of a hardware structure of a mobile terminal for performing a robot control method according to an embodiment of this application;
FIG. 2 is a flowchart of a robot control method according to an embodiment of this application;
FIG. 3 is a schematic diagram of directions of a robot according to an embodiment of this application;
FIG. 4 is a schematic diagram of distances according to an embodiment of this application; and
FIG. 5 is a block diagram of a structure of a robot control apparatus according to an embodiment of this application.

### DETAILED DESCRIPTION

Embodiments of this application are described in detail in the following with reference to the accompanying drawings.

It should be noted that in this specification, claims, and the accompanying drawings of this application, the terms "first", "second", and the like are intended to distinguish between similar objects but do not necessarily indicate a specific order or sequence.

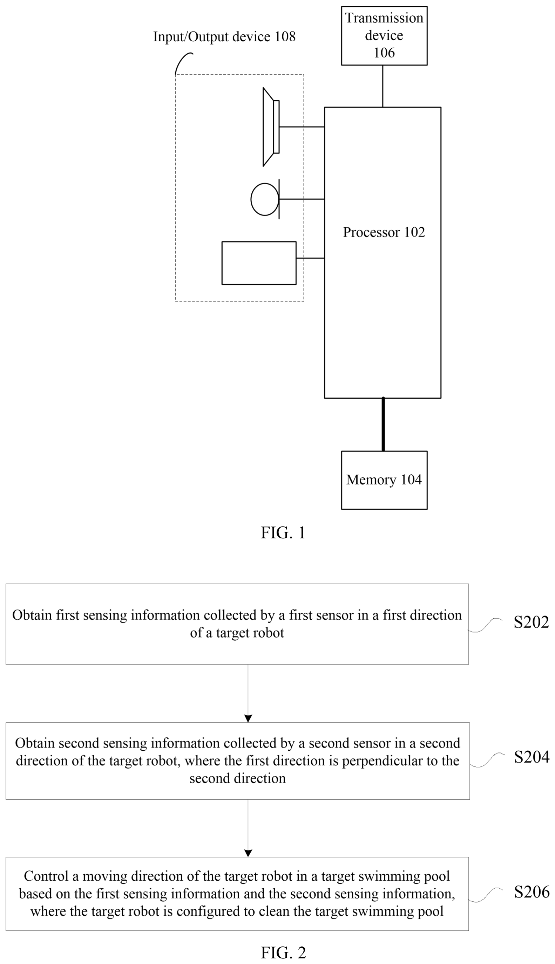

The method provided in embodiments of this application may be performed by a mobile terminal, a computer terminal, or a similar computing apparatus. An example in which the method is performed by the mobile terminal is used. FIG. 1 is a block diagram of a hardware structure of a mobile terminal for performing a robot control method according to an embodiment of this application. As shown in FIG. 1, the mobile terminal may include one or more (only one processor is shown in FIG. 1) processors 102 (the processor 102 may include, but is not limited to, a processing apparatus such as a microprocessor unit or a field-programmable gate array FPGA) and a memory 104 configured to store data. The mobile terminal may further include a transmission device 106 with a communication function and an input/output device 108. A person skilled in the art may understand that the structure shown in FIG. 1 is only an example and does not constitute a limitation on the structure of the mobile terminal. For example, the mobile terminal may include more or fewer components than those shown in FIG. 1 or have a configuration different from that shown in FIG. 1.

The memory 104 may be configured to store a computer program, for example, a software program of an application software and modules, for example, a computer program corresponding to the robot control method in embodiments of this application. The processor 102 executes the computer program stored in the memory 104 to execute various functional applications and data processing, that is, to implement the above method. The memory 104 may include a high-speed random access memory, a non-volatile memory, for example, one or more magnetic storage apparatuses, a flash memory, or another non-volatile solid-state memory. In some examples, the memory 104 may further include memories that are remotely provided relative to the processor 102, and these remote memories may be connected to the mobile terminal through a network. Examples of the foregoing network include, but are not limited to, the Internet, an enterprise intranet, a local area network, a mobile communication network, and a combination thereof.

The transmission device 106 is configured to receive or send data through one network. Specific examples of the network may include a wireless network provided by a communication provider of the mobile terminal. In one example, the transmission device 106 includes a network interface controller (Network Interface Controller, NIC for short) and may be connected to other network devices through a base station to communicate with the Internet. In one example, the transmission device 106 may be a radio frequency (Radio Frequency, RF for short) module configured to communicate with the Internet in a wireless manner.

An embodiment of this application provides a robot control method performed by the mobile terminal. FIG. 2 is a flowchart of the robot control method according to an embodiment of this application. As shown in FIG. 2, the method may include the following steps.

Step S202: Obtain first sensing information collected by a first sensor in a first direction of a target robot.

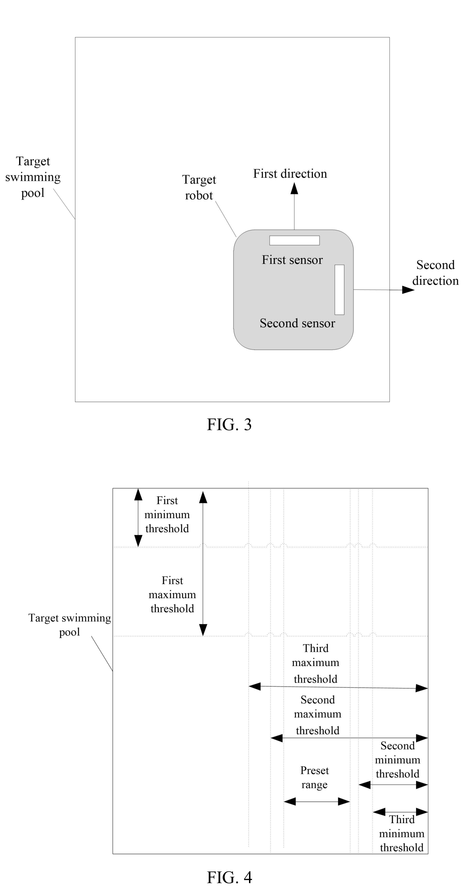

The target robot may be a swimming pool robot. A cleaning apparatus may be provided on the swimming pool robot and configured to clean a swimming pool. The first direction may be a forward direction of the target robot. As shown in FIG. 3, the first sensor is mounted at a front portion of the target robot.

In an embodiment, the cleaning apparatus may be provided on the target robot and filter water in the swimming pool to clean the water. The cleaning apparatus may alternatively be provided in a second direction (for example, a right side) of the target robot and clean a wall of the swimming pool. A cleaning manner of the target robot may be that a pumping apparatus sucks in water through a water inlet, a filter filters out debris and garbage in the water, and filtered water is discharged through a water outlet. In this way, the water in the swimming pool is cleaned.

Step S204: Obtain second sensing information collected by a second sensor in a second direction of the target robot, where the first direction is perpendicular to the second direction.

Each of the first sensor and the second sensor may be a sensor capable of measuring a distance, for example, an ultrasonic sensor, an infrared sensor, or a TOF (Time of Flight) sensor. The second direction may be a leftward direction or a rightward direction of the target robot. An example in which the second direction is the rightward direction of the target robot is used. As shown in FIG. 3, the second sensor is mounted on a right side of the target robot, and the cleaning apparatus may further be mounted on the right side of the target robot.

In another embodiment, a cleaning apparatus may be provided in the second direction of the target robot, and the cleaning apparatus is controlled to clean the target swimming pool in a process of controlling the target robot to move. For example, in a moving process of the target robot, the cleaning apparatus provided in the second direction cleans an inner wall of the target swimming pool.

Step S206: Control a moving direction of the target robot in the target swimming pool based on the first sensing information and the second sensing information, where the target robot is configured to clean the target swimming pool.

Specifically, when a distance indicated by the first sensing information between the target robot and a first obstacle in the first direction reaches a first maximum threshold, the target robot is controlled to move toward a third direction. The third direction is opposite to the second direction.

When the second direction is the rightward direction of the target robot, the third direction is the leftward direction of the target robot. FIG. 4 is a schematic diagram of distances between the target robot and the target swimming pool in the forward direction and the rightward direction. The cleaning apparatus is provided in the rightward direction of the target robot and cleans a wall of the target swimming pool in the moving process of the target robot.

The first maximum threshold may be set based on an actual situation or based on a detection range (a blind zone) of the ultrasonic sensor, for example, may be 1 m. When the first sensor detects that the distance between an obstacle (the first obstacle) in front of the target robot and the target robot reaches the first maximum threshold, it indicates that the front portion of the target robot is close to the wall of the target swimming pool. In this case, the target robot needs to be controlled to perform steering to avoid colliding with the wall of the target swimming pool.

Specifically, the target robot may be controlled to move toward the third direction in the following three manners.

Manner 1: A moving speed of the target robot is reduced when the distance indicated by the first sensing information between the target robot and the first obstacle reaches the first maximum threshold. The moving speed of the target robot is zero when the distance between the target robot and the first obstacle reaches a first minimum threshold. The first minimum threshold is less than the first maximum threshold. When the distance between the target robot and the first obstacle reaches the first minimum threshold, the target robot is controlled to rotate to the third direction. In this embodiment of this application, when the distance between the target robot and the first obstacle in front of the target robot reaches the first minimum threshold, the target robot decelerates to zero and then rotates leftward in situ to the third direction. The first minimum threshold is less than the first maximum threshold. A specific value may be set based on an actual situation, for example, may be 0.4 m. The target robot rotates leftward by an angle, so that the second sensor can detect a second obstacle in the rightward direction, that is, the right side of the target robot is parallel to the second obstacle. The second obstacle may be a wall of the swimming pool on the right of the target robot, and the first obstacle may be a wall of the swimming pool in front of the target robot.

Manner 2: A moving speed of the target robot is reduced when the distance indicated by the first sensing information between the target robot and the first obstacle reaches the first maximum threshold. The moving speed of the target robot is zero when the distance between the target robot and the first obstacle reaches a first minimum threshold. The first minimum threshold is less than the first maximum threshold. When the distance between the target robot and the first obstacle reaches the first minimum threshold, the target robot is controlled to move toward a fourth direction for a preset distance. The fourth direction is opposite to the first direction. When the target robot moves toward the fourth direction for the preset distance, the target robot is controlled to rotate to the third direction. In this embodiment, when the distance between the target robot and the first obstacle in front of the target robot reaches the first minimum threshold, the target robot decelerates to zero, moves backward for the preset distance, that is, moves toward the fourth direction (the fourth direction is a backward direction of the target robot) for the preset distance, and then rotates leftward in situ. The preset distance may be set based on an actual situation. The first minimum threshold may be set smaller, for example, 0.3 m or 0.2 m, so that the robot can clean a corner of the swimming pool more thoroughly. The target robot rotates leftward by an angle, so that the second sensor can detect a second obstacle on the right of the target robot, that is, the right side of the target robot is parallel to the second obstacle. The second obstacle may be a wall of the swimming pool on the right of the target robot, and the first obstacle may be a wall of the swimming pool in front of the target robot.

Manner 3: When the distance indicated by the first sensing information between the target robot and the first obstacle reaches the first maximum threshold, a moving speed of the target robot is reduced, and the target robot is controlled to rotate toward the third direction at a preset rotation speed. When the distance between the target robot and the first obstacle reaches a first minimum threshold, the target robot rotates to the third direction. In this embodiment of this application, when the second direction is the rightward direction of the target robot, the third direction is the leftward direction of the target robot. Before the distance between the target robot and the first obstacle in front of the target robot reaches the first minimum threshold, the target robot decelerates and turns left. When the distance between the target robot and the first obstacle in front of the target robot reaches the first minimum threshold, the target robot rotates leftward.

When a distance indicated by the second sensing information between the target robot and a second obstacle in the second direction is within a preset range, the target robot is controlled to move toward a direction parallel to the second obstacle; or when the distance indicated by the second sensing information between the target robot and the second obstacle is within the preset range, the target robot is controlled to rotate toward the second direction at a preset rotation speed, and when the distance between the target robot and the second obstacle reaches a second minimum threshold, the target robot is controlled to move toward the direction parallel to the second obstacle. The second minimum threshold is less than a minimum value within the preset range.

The second obstacle is an obstacle located in the second direction of the target robot and may be a wall of the swimming pool on the right of the target robot. The preset range may be set based on an actual situation. For example, a range, of a distance between the target robot and the second obstacle, from 0.1 m to 0.2 m is a normal range. In this case, the target robot is controlled to keep moving forward in the direction parallel to the second obstacle on the right of the target robot. Alternatively, the target robot may be controlled to rotate rightward by a preset angle. The preset angle may be set based on an actual situation, for example, 15° or 20°. The target robot is controlled to move forward slowly to the right, so that the robot can be closer to the obstacle on the right of the target robot, enabling the target robot to perform cleaning more thoroughly along an edge. When the target robot moves forward to the right until the distance between the target robot and the second obstacle on the right of the target robot reaches the second minimum threshold, the target robot is adjusted to move forward in the direction parallel to the second obstacle on the right of the target robot. The second minimum threshold is less than the minimum value within the preset range. For example, assuming that the preset range is from 0.1 m to 0.2 m, the second minimum threshold is less than 0.1 m, for example, may be 0.08 m, which may be set based on an actual situation.

The moving direction of the target robot is controlled based on the distance between the target robot and the second obstacle when the distance indicated by the second sensing information between the target robot and the second obstacle is not within the preset range. For example, the following cases may be included.

Case 1: When the distance between the target robot and the second obstacle is less than the second minimum threshold and greater than or equal to a third minimum threshold, a moving speed of the target robot is reduced, and the target robot is controlled to rotate toward a third direction at the preset rotation speed, and when the distance between the target robot and the second obstacle reaches the second minimum threshold, the target robot is controlled to move toward the direction parallel to the second obstacle, where the third minimum threshold is less than the second minimum threshold, and the third direction is opposite to the second direction; or when the distance between the target robot and the second obstacle is less than the third minimum threshold, the target robot is controlled to rotate to the third direction.

The third minimum threshold is a minimum threshold of the distance between the target robot and the second obstacle on the right of the target robot, and the third minimum threshold is less than the second minimum threshold. Assuming that the second minimum threshold is 0.08 m, the third minimum threshold is less than 0.08 m, which may be, for example, 0.05 m. If the distance between the target robot and the second obstacle on the right of the target robot is less than the third minimum threshold, the target robot is controlled to turn left. If the distance between the target robot and the second obstacle on the right of the target robot is less than the second minimum threshold and greater than or equal to the third minimum threshold (for example, may be any distance value from 0.05 m to 0.08 m), the target robot is controlled to move forward to the left until the distance between the target robot and the second obstacle on the right of the target robot reaches the second minimum threshold (assuming that the second minimum threshold is 0.08 m). When the distance between the target robot and the second obstacle on the right of the target robot reaches the second minimum threshold, the target robot is controlled to move toward the direction parallel to the second obstacle on the right of the target robot.

Case 2: When the distance between the target robot and the second obstacle is greater than or equal to a second maximum threshold and less than or equal to a third maximum threshold, the target robot is controlled to rotate toward the second direction at the preset rotation speed, and when the distance between the target robot and the second obstacle reaches the second minimum threshold, the target robot is controlled to move toward the direction parallel to the second obstacle; or when the distance between the target robot and the second obstacle is greater than or equal to the second maximum threshold and less than or equal to the third maximum threshold, the target robot is controlled to rotate toward the second direction at the preset rotation speed, and when the distance between the target robot and the second obstacle reaches the minimum value within the preset range, the target robot is controlled to move toward the direction parallel to the second obstacle; or when the distance between the target robot and the second obstacle is greater than or equal to the third maximum threshold, the target robot is controlled to rotate to the second direction.

The third maximum threshold is a farthest distance between the target robot and the second obstacle on the right of the target robot. The second maximum threshold is less than the third maximum threshold, and the second maximum threshold is greater than a maximum value within the preset range. Assuming that the preset range is from 0.1 m to 0.2 m, the second maximum threshold is greater than 0.2 m, for example, may be 0.3 m, and the third maximum threshold is greater than the second maximum threshold, for example, may be 0.4 m. When the distance between the target robot and the second obstacle on the right of the target robot is greater than or equal to the third maximum threshold, the target robot is controlled to turn right.

When the distance between the target robot and the second obstacle on the right of the target robot is greater than or equal to the second maximum threshold and less than or equal to the third maximum threshold, the target robot is controlled to rotate rightward at the preset rotation speed, and a preset angle may be determined based on an actual situation, for example, 10° or 15°. Then, the target robot is controlled to move forward to the right until the distance between the target robot and the second obstacle on the right of the target robot reaches the second minimum threshold, and then the target robot is controlled to move toward the direction parallel to the second obstacle, or the target robot is controlled to move forward to the right until the distance between the target robot and the second obstacle reaches the minimum value within the preset range, and then the target robot is controlled to move toward the direction parallel to the second obstacle.

An example in which the first direction is the forward direction of the target robot, and the second direction is the rightward direction of the target robot is used. The first sensor and the second sensor may be ultrasonic sensors with high waterproof performance and respectively arranged at the front portion and the right side of the target robot. The first sensor at the front portion is configured to detect an obstacle in front of the target robot to avoid colliding with the obstacle in front of the target robot. The second sensor on the right side is configured to detect an obstacle in the rightward direction of the target robot, so that the target robot keeps an appropriate distance from a pool wall on the right of the target robot in a process of moving along an edge of the swimming pool.

The above steps may be executed by a swimming pool robot or the like. However, this is not limited thereto. The swimming pool robot may move on one or more of a bottom wall, a side wall, or a water surface of the swimming pool and perform a related task, for example, cleaning and disinfection.

An execution sequence of step S202 and step S204 may be changed. In other words, step S204 may be first performed, and then step S202 may be performed.

Based on the above steps, the first sensor is provided in the first direction of the target robot, the first sensor collects the first sensing information in the first direction, the second sensor is provided in the second direction of the target robot, the second sensor collects the second sensing information in the second direction, and the moving direction of the target robot is controlled based on the first sensing information and the second sensing information. In this way, the target robot cleans the target swimming pool. In this way, the following case in a related technology can be avoided: A distance between the swimming pool robot and a wall of the swimming pool is inappropriate, leading to incomplete cleaning of the swimming pool. This improves a swimming pool cleaning effect and cleaning efficiency.

In embodiments of this application, a probability grid map may be further constructed based on the first sensing information and the second sensing information collected by the first sensor and the second sensor, and the probability grid map is fused with data of an inertial measurement unit IMU, a code disk, a water depth sensor, and the like to position the target robot in real time. The target robot performs underwater cleaning along an edge of a wall of the swimming pool and completes construction of the map of the entire swimming pool simultaneously to provide a boundary reference for path planning. According to this application, an ultrasonic sensor with high waterproof performance and an intelligent full-coverage solution are used in combination, so that the cleaning efficiency and intelligence of the swimming pool robot are significantly improved. The waterproof performance of the ultrasonic sensor is improved, so that the sensor meets a requirement of long-term underwater operation. Compared with an existing swimming pool robot, the swimming pool robot in this application can obtain rich information about an underwater obstacle and deal with the obstacle effectively, and the cleaning efficiency of the robot and use efficiency of a battery capacity can be improved according to an intelligent full-coverage solution of the bottom of the pool.

Based on the foregoing descriptions of the implementations, a person skilled in the art may clearly understand that the method in the above embodiment may be implemented by software in addition to a necessary universal hardware platform or by hardware only. In many cases, the former is a preferred implementation. Based on such understanding, the technical solutions of this application can be essentially or the part that contributes to the related technology can be embodied in a form of a software product. This computer software product is stored in a storage medium (for example, a ROM/RAM, a magnetic disk, or a compact disc), and includes several instructions for instructing a terminal device (which may be a mobile phone, a computer, a server, or a network device) to perform the method described in embodiments of this application.

An embodiment of this application further provides a robot control apparatus. The apparatus is configured to implement the above embodiments and optional implementations. Some that have been described are not described in detail again. The term "module" used below may be a combination of software and/or hardware that implements a preset function. Although the apparatus described in the following embodiment is preferably implemented in software, it may be conceived that the apparatus is implemented in hardware or a combination of software and hardware.

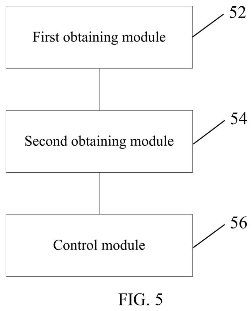

FIG. 5 is a block diagram of a structure of a robot control apparatus according to an embodiment of this application. As shown in FIG. 5, the apparatus includes: a first obtaining module 52 configured to obtain first sensing information collected by a first sensor in a first direction of a target robot; a second obtaining module 54 configured to obtain second sensing information collected by a second sensor in a second direction of the target robot, where the first direction is perpendicular to the second direction; and a control module 56 configured to control a moving direction of the target robot in a target swimming pool based on the first sensing information and the second sensing information, where the target robot is configured to clean the target swimming pool.

In an example embodiment, the apparatus is further configured to control, when a distance indicated by the first sensing information between the target robot and a first obstacle in the first direction reaches a first maximum threshold, the target robot to move toward a third direction. The third direction is opposite to the second direction.

In an example embodiment, the apparatus is further configured to: reduce a moving speed of the target robot when the distance indicated by the first sensing information between the target robot and the first obstacle reaches the first maximum threshold, where the moving speed of the target robot is zero when the distance between the target robot and the first obstacle reaches a first minimum threshold, where the first minimum threshold is less than the first maximum threshold; and when the distance between the target robot and the first obstacle reaches the first minimum threshold, control the target robot to rotate to the third direction.

In an example embodiment, the apparatus is further configured to: reduce a moving speed of the target robot when the distance indicated by the first sensing information between the target robot and the first obstacle reaches the first maximum threshold, where the moving speed of the target robot is zero when the distance between the target robot and the first obstacle reaches a first minimum threshold, where the first minimum threshold is less than the first maximum threshold; when the distance between the target robot and the first obstacle reaches the first minimum threshold, control the target robot to move toward a fourth direction for a preset distance, where the fourth direction is opposite to the first direction; and when the target robot moves toward the fourth direction for the preset distance, control the target robot to rotate to the third direction.

In an example embodiment, the apparatus is further configured to: when the distance indicated by the first sensing information between the target robot and the first obstacle reaches the first maximum threshold, reduce a moving speed of the target robot and control the target robot to rotate toward the third direction at a preset rotation speed, where when the distance between the target robot and the first obstacle reaches a first minimum threshold, the target robot rotates to the third direction.

In an example embodiment, the apparatus is further configured to: when a distance indicated by the second sensing information between the target robot and a second obstacle in the second direction is within a preset range, control the target robot to move toward a direction parallel to the second obstacle; or control, when the distance indicated by the second sensing information between the target robot and the second obstacle is within the preset range, the target robot to rotate toward the second direction at a preset rotation speed, and control, when the distance between the target robot and the second obstacle reaches a second minimum threshold, the target robot to move toward the direction parallel to the second obstacle, where the second minimum threshold is less than a minimum value within the preset range; or control the moving direction of the target robot based on the distance between the target robot and the second obstacle when the distance indicated by the second sensing information between the target robot and the second obstacle is not within the preset range.

In an example embodiment, the apparatus is further configured to: when the distance between the target robot and the second obstacle is less than the second minimum threshold and greater than or equal to a third minimum threshold, reduce a moving speed of the target robot and control the target robot to rotate toward a third direction at the preset rotation speed, and when the distance between the target robot and the second obstacle reaches the second minimum threshold, control the target robot to move toward the direction parallel to the second obstacle, where the third minimum threshold is less than the second minimum threshold, and the third direction is opposite to the second direction; or when the distance between the target robot and the second obstacle is less than the third minimum threshold, control the target robot to rotate to the third direction.

In an example embodiment, the apparatus is further configured to: when the distance between the target robot and the second obstacle is greater than or equal to a second maximum threshold and less than or equal to a third maximum threshold, control the target robot to rotate toward the second direction at the preset rotation speed, and when the distance between the target robot and the second obstacle reaches the second minimum threshold, control the target robot to move toward the direction parallel to the second obstacle; or when the distance between the target robot and the second obstacle is greater than or equal to the second maximum threshold and less than or equal to the third maximum threshold, control the target robot to rotate toward the second direction at the preset rotation speed, and when the distance between the target robot and the second obstacle reaches the minimum value within the preset range, control the target robot to move toward the direction parallel to the second obstacle; or when the distance between the target robot and the second obstacle is greater than or equal to the third maximum threshold, control the target robot to rotate to the second direction.

In an example embodiment, a cleaning apparatus is provided in the second direction of the target robot, and the apparatus is further configured to: in a process of controlling the target robot to move, control the cleaning apparatus to clean the target swimming pool.

In an example embodiment, the first direction is a forward direction of the target robot, and the second direction is a leftward direction or a rightward direction of the target robot.

It should be noted that each module may be implemented by software or hardware, and for the latter, it may be implemented in the following manner: All modules are located in a same processor, or various modules are located in different processors respectively in a form of any combination. However, this is not limited thereto.

An embodiment of this application further provides a computer-readable storage medium. The computer-readable storage medium stores a computer program. When the computer program is run, steps in any one of the method embodiments are performed.

In an example embodiment, the computer-readable storage medium may include, but is not limited to, any medium that can store the computer program, for example, a USB flash drive, a read-only memory (Read-Only Memory, ROM for short), a random access memory (Random Access Memory, RAM for short), a removable hard disk, a magnetic disk, or a compact disc.

An embodiment of this application further provides an electronic device. The electronic device includes a memory and a processor. The memory stores a computer program. The processor is configured to: when executing the computer program, perform steps in any one of the method embodiments.

In an example embodiment, the electronic device may further include a transmission device and an input/output device. The transmission device is connected to the processor, and the input/output device is connected to the processor.

An embodiment of this application further provides a swimming pool robot. The swimming pool robot includes: a first sensor provided in a first direction of the swimming pool robot and configured to collect first sensing information in the first direction; a second sensor provided in a second direction of the swimming pool robot and configured to collect second sensing information in the second direction; a processor configured to control a moving direction of the target robot in a target swimming pool based on the first sensing information and the second sensing information, where the swimming pool robot is configured to clean the target swimming pool; and a cleaning apparatus configured to clean the target swimming pool.

For details of specific examples in this embodiment of this application, refer to the examples described in the above embodiments and example implementations. Details are not described in this embodiment again.

It is clear that a person skilled in the art should understand that the modules or steps in this application may be implemented by a general-purpose computing apparatus, and the modules may be integrated on a single computing apparatus or distributed on a network including a plurality of computing apparatuses, or may be implemented by program code executed by a computing apparatus. In this way, the program code can be stored in a storage apparatus and executed by the computing apparatus. In addition, in some cases, the shown or described steps may be performed in an order different from the above order, or the modules are respectively manufactured into various integrated circuit modules, or a plurality of modules are manufactured into a single integrated circuit module. In this way, this application is not limited to any particular combination of hardware and software.

The foregoing descriptions are merely preferred embodiments of this application, and are not intended to limit this application. For a person skilled in the art, this application may have various modifications and variations. Any modification, equivalent replacement, improvement, or the like made without departing from the principle of this application shall fall within the protection scope of this application.

## Claims

1. A robot control method, comprising:
obtaining first sensing information collected by a first sensor in a first direction of a target robot;
obtaining second sensing information collected by a second sensor in a second direction of the target robot, wherein the first direction is perpendicular to the second direction; and
controlling a moving direction of the target robot in a target swimming pool based on the first sensing information and the second sensing information, wherein the target robot is configured to clean the target swimming pool.

2. The method according to claim 1, wherein the controlling a moving direction of the target robot in a target swimming pool based on the first sensing information and the second sensing information comprises:
controlling, when a distance indicated by the first sensing information between the target robot and a first obstacle in the first direction reaches a first maximum threshold, the target robot to move toward a third direction, wherein the third direction is opposite to the second direction.

3. The method according to claim 2, wherein the controlling, when a distance indicated by the first sensing information between the target robot and a first obstacle reaches a first maximum threshold, the target robot to move toward a third direction comprises:
reducing a moving speed of the target robot when the distance indicated by the first sensing information between the target robot and the first obstacle reaches the first maximum threshold, wherein the moving speed of the target robot is zero when the distance between the target robot and the first obstacle reaches a first minimum threshold, wherein the first minimum threshold is less than the first maximum threshold; and
when the distance between the target robot and the first obstacle reaches the first minimum threshold, controlling the target robot to rotate to the third direction.

4. The method according to claim 3, wherein after the moving speed of the target robot is zero when the distance between the target robot and the first obstacle reaches the first minimum threshold, the method further comprises:
controlling the robot to rotate toward the third direction in situ until the second sensor is capable of detecting a second obstacle in the second direction of the robot.

5. The method according to claim 2, wherein the controlling, when a distance indicated by the first sensing information between the target robot and a first obstacle reaches a first maximum threshold, the target robot to move toward a third direction comprises:
reducing a moving speed of the target robot when the distance indicated by the first sensing information between the target robot and the first obstacle reaches the first maximum threshold, wherein the moving speed of the target robot is zero when the distance between the target robot and the first obstacle reaches a first minimum threshold, wherein the first minimum threshold is less than the first maximum threshold;
when the distance between the target robot and the first obstacle reaches the first minimum threshold, controlling the target robot to move toward a fourth direction for a preset distance, wherein the fourth direction is opposite to the first direction; and
when the target robot moves toward the fourth direction for the preset distance, controlling the target robot to rotate to the third direction.

6. The method according to claim 2, wherein the controlling, when a distance indicated by the first sensing information between the target robot and a first obstacle reaches a first maximum threshold, the target robot to move toward a third direction comprises:
when the distance indicated by the first sensing information between the target robot and the first obstacle reaches the first maximum threshold, reducing a moving speed of the target robot and controlling the target robot to rotate toward the third direction at a preset rotation speed, wherein when the distance between the target robot and the first obstacle reaches a first minimum threshold, the target robot rotates to the third direction.

7. The method according to claim 1, wherein the controlling a moving direction of the target robot in a target swimming pool based on the first sensing information and the second sensing information comprises:
when a distance indicated by the second sensing information between the target robot and a second obstacle in the second direction is within a preset range, controlling the target robot to move toward a direction parallel to the second obstacle; or
controlling, when the distance indicated by the second sensing information between the target robot and the second obstacle is within the preset range, the target robot to rotate toward the second direction at a preset rotation speed, and controlling, when the distance between the target robot and the second obstacle reaches a second minimum threshold, the target robot to move toward the direction parallel to the second obstacle, wherein the second minimum threshold is less than a minimum value within the preset range; or
controlling the moving direction of the target robot based on the distance between the target robot and the second obstacle when the distance indicated by the second sensing information between the target robot and the second obstacle is not within the preset range.

8. The method according to claim 7, wherein the controlling the moving direction of the target robot based on the distance between the target robot and the second obstacle when the distance indicated by the second sensing information between the target robot and the second obstacle is not within the preset range comprises:
when the distance between the target robot and the second obstacle is less than the second minimum threshold and greater than or equal to a third minimum threshold, reducing a moving speed of the target robot and controlling the target robot to rotate toward a third direction at the preset rotation speed, and when the distance between the target robot and the second obstacle reaches the second minimum threshold, controlling the target robot to move toward the direction parallel to the second obstacle, wherein the third minimum threshold is less than the second minimum threshold, and the third direction is opposite to the second direction; or
when the distance between the target robot and the second obstacle is less than the third minimum threshold, controlling the target robot to rotate to the third direction.

9. The method according to claim 7, wherein the controlling the moving direction of the target robot based on the distance between the target robot and the second obstacle when the distance indicated by the second sensing information between the target robot and the second obstacle is not within the preset range comprises:
when the distance between the target robot and the second obstacle is greater than or equal to a second maximum threshold and less than or equal to a third maximum threshold, controlling the target robot to rotate toward the second direction at the preset rotation speed, and when the distance between the target robot and the second obstacle reaches the second minimum threshold, controlling the target robot to move toward the direction parallel to the second obstacle; or
when the distance between the target robot and the second obstacle is greater than or equal to the second maximum threshold and less than or equal to the third maximum threshold, controlling the target robot to rotate toward the second direction at the preset rotation speed, and when the distance between the target robot and the second obstacle reaches the minimum value within the preset range, controlling the target robot to move toward the direction parallel to the second obstacle; or
when the distance between the target robot and the second obstacle is greater than or equal to the third maximum threshold, controlling the target robot to rotate to the second direction.

10. The method according to claim 1, wherein
a cleaning apparatus is disposed in the second direction of the target robot, and the method further comprises: in a process of controlling the target robot to move, controlling the cleaning apparatus to clean the target swimming pool.

11. The method according to claim 1, wherein the first direction is a forward direction of the target robot, and the second direction is a leftward direction or a rightward direction of the target robot.

12. The method according to any one of claims 1 to 11, wherein the first sensor is configured as a waterproof ultrasonic sensor, and the second sensor is configured as a waterproof ultrasonic sensor.

13. The method according to any one of claims 1 to 11, wherein the first direction is the forward direction of the target robot, and the second direction is the rightward direction of the target robot.

14. A robot control apparatus used in the robot control method according to any one of claims 1 to 13, comprising:
a first obtaining module configured to obtain first sensing information collected by a first sensor in a first direction of a target robot;
a second obtaining module configured to obtain second sensing information collected by a second sensor in a second direction of the target robot, wherein the first direction is perpendicular to the second direction; and
a control module configured to control a moving direction of the target robot in a target swimming pool based on the first sensing information and the second sensing information, wherein the target robot is configured to clean the target swimming pool.

15. A swimming pool robot used in the robot control method according to any one of claims 1 to 13, comprising:
a first sensor disposed in a first direction of the swimming pool robot and configured to collect first sensing information in the first direction;
a second sensor disposed in a second direction of the swimming pool robot and configured to collect second sensing information in the second direction;
a processor configured to control a moving direction of the target robot in a target swimming pool based on the first sensing information and the second sensing information, wherein the swimming pool robot is configured to clean the target swimming pool; and
a cleaning apparatus configured to clean the target swimming pool.

16. The robot according to claim 15, wherein the cleaning apparatus filters water in the target swimming pool to clean the water in the target swimming pool.

17. The robot according to claim 15, wherein the cleaning apparatus is disposed in the second direction of the robot and configured to clean a wall of the target swimming pool.

18. The robot according to claim 15, wherein the cleaning apparatus comprises a pumping apparatus and a filter, wherein the pumping apparatus is configured to suck in water in the target swimming pool through a water inlet of the pumping apparatus, the filter is configured to filter out debris and/or garbage in the water, and filtered water is discharged through a water outlet of the pumping apparatus, so that the water in the target swimming pool is cleaned.

19. A computer-readable storage medium, wherein the computer-readable storage medium stores a computer program, and when the computer program is executed by a processor, steps of the method according to any one of claims 1 to 13 are implemented.

20. An electronic device, comprising a memory, a processor, and a computer program that is stored in the memory and that is capable of being run on the processor, wherein when executing the computer program, the processor implements steps of the method according to any one of claims 1 to 13.
